# EUROPEAN PATENT SPECIFICATION

(11) **EP 1 519 993 B1**
(45) Date of publication and mention of the grant of the patent: **18.04.2007**
(21) Application number: 02755258.7
(22) Date of filing: 29.08.2002
(51) Int. Cl.: C08L 83/04, C08K 5/31

(54) **ROOM TEMPERATURE CURABLE ORGANOPOLYSILOXANE COMPOSITIONS**
BEI RAUMTEMPERATUR HÄRTBARE ORGANOPOLYSILOXANZUSAMMENSETZUNGEN
COMPOSITIONS D'ORGANOPOLYSILOXANE PRENANT A TEMPERATURE AMBIANTE

(43) Date of publication of application: 06.04.2005
(73) Proprietor: Amber Chemical Company Ltd., Somerset TA6 6AJ (GB)
(72) Inventor: FLANNIGAN, William, Tait, Taunton Somerset TA1 5HF (GB); RIDLEY, Martin, Brandon, North Somerset BS22 7FD (GB)
(74) Representative: Hartley, Andrew Philip
(86) International application number: PCT/GB2002/003940
(87) International publication number: WO 2004/020525

(56) References cited:
- US-A- 4 180 642
- US-A- 4 248 992
- US-A- 4 695 617

## Description

### Field of the Invention

This invention generally relates to a process for producing room temperature, moisture curable organopolysiloxane compositions for use as adhesive sealants and coatings. Specifically, this invention relates to room temperature vulcanisable (RTV) organopolysiloxane compositions which are readily cured in the presence of atmospheric moisture to form elastomers and more specifically, to such RTV compositions which are curable into rubbery elastomers having improved primerless adhesion and non-corrosive properties to sensitive substrates which are otherwise difficult to bond.

### Problem

Room temperature vulcanisable (curable) compositions (known as RTVs) based on the so-called condensation reactions of silanes and hydroxyl-terminated organopolysiloxanes are well known to those in the art. These compositions are cured by exposure to atmospheric moisture to form elastomeric materials that are widely used as adhesive sealants, gaskets and potting agents in a wide variety of applications ranging from electrical and electronics to aerospace and construction.

Many silicone sealants are unsuitable for certain applications because of their corrosive effects on sensitive metals such as copper and its alloys. These silicone sealants, typically including an amino-functional silane as an internal adhesion promoter, have been shown to cause corrosion on copper and its alloys often in the presence of certain crosslinking agents and organometallic catalysts.

Further, many silicone sealants are unsuitable for some applications due to their limited adhesion to various substrates. These substrates often require priming to achieve satisfactory adhesion. Priming substrates is disadvantageous from the time and cost standpoints.

Finally, most catalysts used in silicone sealants are organometallic compounds, the most common of which are organo-tin substances. Many such catalysts are classified as "harmful to the environment", whilst many organo-tin catalysts may also exhibit toxic and/or irritant characteristics. Organometallic catalysts, such as dibutyltin dilaurate and tetra-butyl titanate, have also been shown to cause premature gelation and curing of sealants of the type described.

Information relevant to attempts to address these problems can be found in U.S. Patent Nos. 5,969,075 issued 19 October 1999 to Inoue; 4,487,907 issued 11 December 1984 to Fukayama, et al.; 5,525,660 issued 11 June 1996 to Shiono, et al.; 6,214,930 issued 10 April 2001 to Miyake, et al. and 4,973,623 issued 27 November 1990 to Haugsby, et al. However, each one of these references suffers from one or more of the following disadvantages: priming of substances prior to application of the silicone sealant and corrosive properties of the silicone sealant.

### Solution

The above-described problems are solved and a technical advance achieved by the present RTV organopolysiloxane composition including a novel combination of a crosslinking component and non-organometallic curing catalyst.

The purpose of this invention is to provide a method of preparing silicone adhesive sealants that cure at room temperature in the presence of atmospheric moisture, possess excellent primerless adhesion to many substrates and do not exhibit corrosive properties towards copper, its alloys and other commonly used metals / plastics.

The invention describes a means of preparing and curing a condensation-cure, one-component silicone adhesive sealant without the use of organometallic catalysts. The invention uses an organic imine catalyst, such as 1,1,3,3-Tetramethylguanidine, thereby removing the need for organometallic catalysts. In conjunction with certain alkoxysilanes the organic imine obviates the need for an extremely expensive and complex guanidyl silane.

These sealants offer good shelf-life stability and relatively fast curing properties.

The present RTV organopolysiloxane composition consists of a number of components, which are combined in the manner described below to produce a condensation-cure, one-component silicone adhesive sealant without the use of organometallic catalysts. These components include an organopolysiloxane having at least two hydroxyl groups attached to the terminal silicon atoms of the molecule, combined with a silica filler that is added to provide physical strength to the cured elastomer. In addition, an amino-functional silane, an organic imine catalyst and a silane crosslinking agent are added to the composition. Additional components may be added to the composition to control the rate of cure of the sealants of this invention and snappiness of the cured elastomer, and to provide other desirable properties as described below.

### Detailed Description

The present RTV organopolysiloxane composition consists of a number of components, which are combined in the manner described below to produce a condensation-cure, one-component silicone adhesive sealant without the use of organometallic catalysts. The present invention is a RTV organopolysiloxane composition comprising (A) an organopolysiloxane having at least two hydroxyl groups attached to the terminal silicon atoms of the molecule, (B) finely divided silica filler, (C) an amino-functional silane containing at least one amino-group per molecule, (D) a silane crosslinking agent, (E) a trialkoxysilane, and (F) an organic imine or substituted imine.

Component (A) is an organopolysiloxane having at least two hydroxyl groups attached to the terminal silicon atoms of the molecule. Preferably, it is an organopolysiloxane blocked with a hydroxyl group at either end represented by the following formula (1). 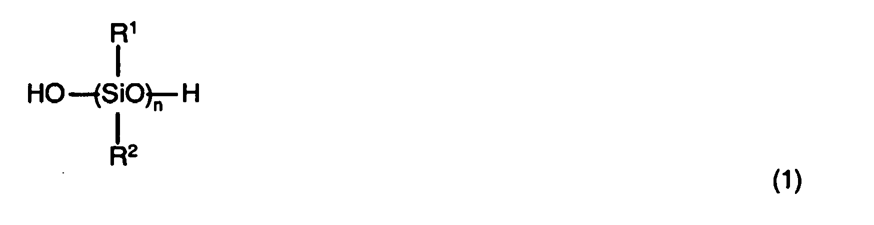 In formula (1), groups R¹ and R², which may be the same or different, are independently selected from substituted or unsubstituted monovalent hydrocarbon groups having 1 to 10 carbon atoms, for example methyl, ethyl, propyl, butyl, cyclohexyl, vinyl, allyl, phenyl, tolyl, benzyl, octyl, 2-ethylhexyl or groups such as trifluoropropyl or cyanoethyl. The preferred groups are methyl. The latter may be substituted by trifluoropropyl or phenyl to impart specific properties to the cured elastomer. Letter n is such an integer that the diorganopolysiloxane may have a viscosity of 50 to 500,000 mPa.s at 25° C, preferably 2,000 to 100,000 mPa.s. Blends of differing viscosities may be used to achieve a desired effect.

Component (B) is finely divided silicon dioxide that is added to provide physical strength to the cured elastomer. Examples of suitable silica fillers include fumed silica, fused silica, precipitated silica and powdered quartz. which are optionally surface treated with silazanes, chlorosilanes or organopolysiloxanes to render them hydrophobic. The preferred silicas are those having a specific surface area of at least 50 m²/g as measured by the BET method. The above silicas may be blended in any desired ratio.

In order to achieve the desired physical properties in the cured elastomer, an appropriate amount of Component (B), about 1 to 40 parts by weight, is blended into 100 parts by weight of Component (A) until a smooth, agglomerate-free dispersion in obtained.

Component (C) is an amino-functional silane containing at least one amino-group per molecule. Illustrative examples of the amino-functional silane are given below.The amino-functional silane is provided to promote adhesion between the sealant and inorganic and/or organic substrates. Component (C) is a compound of the following formula: 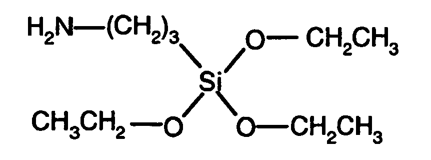 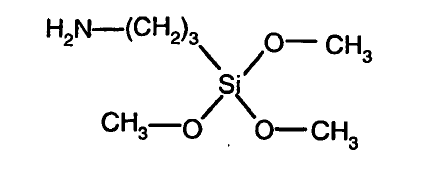 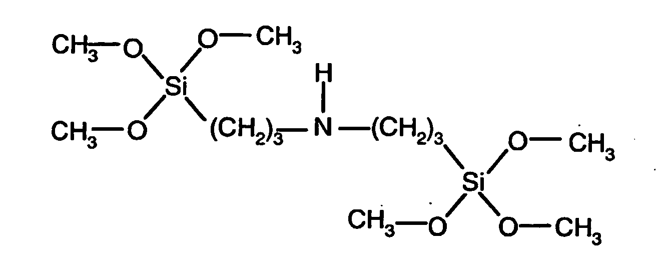 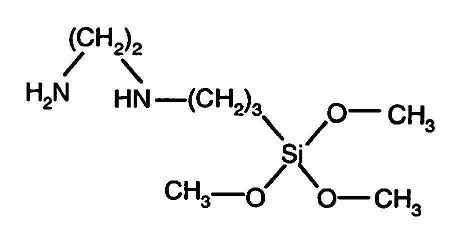 Suitable silanes are available from Crompton OSi Specialities under the trade identity: Silane A-1100: γ-aminopropyltriethoxysilane, Silane, A-1110: γ-aminopropyltrimethoxysilane, Silane A-1120: β-aminoethyl-γ-aminopropyltrimethoxysilane, Silane A-1130: Triaminofunctional silane, Silane Y-9669: N-phenyl-γ-aminopropyltrimethoxysilane, Silane A-1170: Bis- [γ-(trimethoxysilyl) propyl]amine and Silane A-2120: N-β-aminoethyl-γ-aminopropylmethyldimethoxysilane.

Component (D) is a silane crosslinking agent represented by the following formula (2).

RₙSiX₄₋ₙ (2)

In formula (2) R represents a substituted or unsubstituted monovalent hydrocarbon group of 1 to 10 carbon atoms, X is a 1-methyvinyloxy (also known as isopropenyloxy) group, and letter n is equal to 0, 1 or 2. Preferably, the silane crosslinking agent is selected from methyl *tris*-isopropenyloxy silane, vinyl tris-isopropenyloxy silane, phenyl *tris*-isopropenyloxy silane or combinations of the aforesaid crosslinking agents.

Component (E) is a trialkoxysilane that is employed to control the rate of cure of the sealants of this invention and snappiness of the cured elastomer. Component (E) is represented by formula (3)

RₚSiX₄₋ₚ (3)

In formula (3) R represents a methyl, phenyl, vinyl or substituted vinyl group and X is a methoxy or ethoxy group or a mixture of methoxy and ethoxy groups. Letter p is equal to 0, 1 or 2. Some examples of suitable silanes are available from Compton OSi Specialities under the trade identity: Silane A-162: Methyltriethoxysilane, Silane A-163: Methyltrimethoxysilane, Silane A-151: Vinyltriethoxysilane, Silane A-171: Vinyltrimethoxysilane and also Phenyltriethoxysilane, Phenyltrimethoxysilane from Lancaster Synthesis.

**Component (F) is an organic imine or a substituted imine, which is used** as a catalyst and is of the general formulas (4a) and (4b): 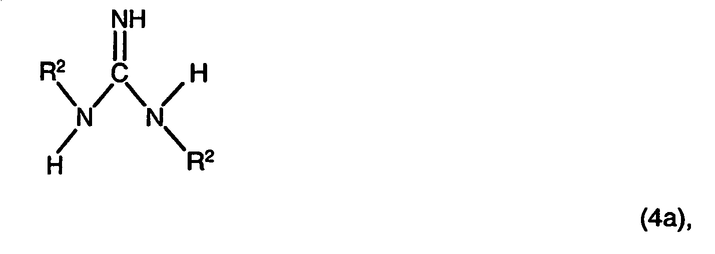 and 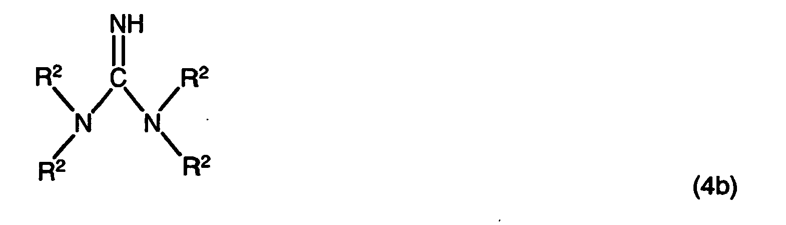 wherein R² is independent and selected from methyl, isopropyl, phenyl and *ortho*-tolyl groups. Some examples of the organic imine or substituted imine include: 1,3-Diphenylguanidine, 1,3-Di-o-tolylguanidine, 1,3-Dimethylguanidine and 1,1,3,3-Tetramethylguanidine. The preferred compound is 1,1,3,3-Tetramethylguanidine.

Other materials such as bulking fillers, for example micronised quartz, calcium carbonate, talc, magnesium oxide, aluminium oxide and aluminosilicates may be used insofar as the main properties of the sealants are not affected. Useful additives such as iron oxide, titanium dioxide and cerium oxide for thermal stability; fungicidal compounds for extended protection; carbon black, titanium dioxide and other coloured pigments to enhance appearance and fire retardant compounds may be used. Such additives are normally added following addition of Component (B).

Examples of the invention are given below by way of illustration and not by way of limitation. All parts are by weight. The viscosity is a measurement at 25° C using a Brookfield Rotary Spindle Viscometer.

### EXAMPLE 1

A uniform mixture was prepared by blending 100 parts of a hydroxyl-terminated polydimethylsiloxane polymer with a viscosity of approximately 50,000 mPa.s with 100 parts of a second hydroxyl-terminated polydimethylsiloxane polymer of viscosity of approximately 10,000 mPa.s (Components A). To the above blend of polymers was added 17.2 parts by weight of hydrophobised fumed silica (Degussa R972). The latter was mixed into the polymer blend until a smooth, agglomerate-free dispersion was obtained. 7.4 parts of a hydrophobised fumed silica (Cab-O-Sil LM150) was added to the above filler dispersion and mixed until fully dispersed (These fillers are Components B). 4.9 parts of carbon black masterbatch was added to the polymer/filler dispersion and blended until a uniform mixture was obtained. This mixture is called Dispersion 1.

A sealant, Example 1 (a) according to the invention, and a comparative sealant 1 (b) were prepared by adding each of the components shown in Table 1 in the order given.

**TABLE 1**

| | Example | |
|---|---|---|
| (Parts by weight) | 1(a) | 1(b) |
| Dispersion 1 | 100 | 100 |
| Vinyl *tris*-isopropenyloxy silane | 6.30 | --- |
| Vinyltrimethoxysilane | 0.30 | --- |
| Methyl *tris*-(2-butanoximo)silane | --- | 3.75 |
| Vinyl *tris*-(2-butanoximo)silane | --- | 0.55 |
| γ-aminopropyltriethoxysilane | 1.07 | 0.55 |
| Dibutyltin dilaurate | --- | 0.05 |
| 1,1,3,3-Tetramethylguanidine | 0.44 | --- |

The above formulations were semi-flowable products with a slump in excess of 10 mm when tested on a Boeing Jig. They were stable for at least 12 months at ambient temperatures and exhibited no significant change in properties after storing at 40° C for 3 months.

The results of the following tests, carried out to test the suitability of the products for electronic applications are summarised in Table2:

*Tack Free Time.* The time taken for the sealant to form a dry non-adherent skin on the surface following exposure to atmospheric moisture.

*Cure Through Time.* This is considered to be the time taken after exposure to atmospheric moisture for the sealant to cure to a depth of 3 mm.

*Adhesion*/*Corrosion.* The substrates chosen are stainless steel, aluminium, polyester powder coated metal, copper and brass. Corrosion was assessed on a scale of 1 to 5. The higher the mark the worse the corrosive properties.

*General Physical Properties* as shown in Table 2. Samples were examined for the mode of adhesive failure and for any corrosive action or surface attack.

**TABLE 2**

| Test | | Example | | | |
|---|---|---|---|---|---|
| | | 1(a) | | 1(b) | |
| Tack Free Time, min | | 3 to 4 | | 9 to 10 | |
| Cure Through, hours | | <16 | | 24 | |
| Tensile Strength, MPa | | ~1.2 | | 1.3 | |
| Elongation at Break, % | | ~180 | | 210 | |
| Hardness, Shore A | | 40 | | 35 | |

| Adhesion- | | Fail Mode | Corrosion | Fail Mode | Corrosion |
|---|---|---|---|---|---|
| | Stainless Steel | Cohesive | 1 | Cohesive | 1 |
| | Aluminium | Cohesive | 1 | Cohesive | 1 |
| | PC Polyester | Cohesive | 1 | Cohesive | 2 |
| | Copper | Cohesive | 1 | Cohesive | 5 |
| | Brass | Cohesive | 1 | Cohesive | 4 |

### EXAMPLE 2

A uniform mixture was prepared by blending 50 parts of a hydroxyl-terminated polydimethylsiloxane polymer with a viscosity of approximately 50,000 mPa.s with 100 parts of a second hydroxyl-terminated polydimethylsiloxane polymer of viscosity of approximately 10,000 mPa.s (Components A). To the above blend of polymers was added 15.0 parts by weight of hydrophobised fumed silica (Degussa R972). The latter was mixed into the polymer blend until a smooth, agglomerate-free dispersion was obtained. 6.0 parts of a hydrophilic fumed silica (Cab-O-Sil LM150) was added to the above filler dispersion and mixed until fully dispersed (These fillers are Components B). 3.0 parts of carbon black masterbatch was added to the polymer/filler dispersion and blended until a uniform mixture was obtained. This mixture is called Dispersion 2.

A sealant, Example 2(a) according to the invention and a comparative sealant 2(b) were prepared by adding each of the components shown in Table 3 in the order given. The test results are given in Table 3.

**TABLE 3**

| | Example | |
|---|---|---|
| (Parts by weight) | 2(a) | 2(b) |
| Dispersion 2 | 100 | 100 |
| Vinyl *tris*-isopropenyloxy silane | 6.35 | --- |
| Vinyltrimethoxysilane | 0.30 | --- |
| Methyl *tris*-(2-butanoximo)silane | --- | 3.75 |
| Vinyl *tris*-(2-butanoximo)silane | --- | 0.55 |
| γ-aminopropyltriethoxysilane | 0.55 | 0.55 |
| Dibutyltin dilaurate | --- | 0.05 |
| 1,1,3,3-Tetramethylguanidine | 0.44 | --- |

The above formulations were semi-thixotropic products with a slump in the order of 8-10 mm when tested on a Boeing Jig. They were stable for at least 12 months at ambient temperatures and exhibited no significant change in properties after storing at 40° C for 3 months. Samples were examined for the mode of adhesive failure and for any corrosive action or surface attack. The results are summarised in Table 4.

**TABLE 4**

| Test | | Example | | | |
|---|---|---|---|---|---|
| | | 2(a) | | 2(b) | |
| Tack Free Time, min | | 3 to 4 | | 9 to 10 | |
| Cure Through, hours | | <16 | | 24 | |
| Tensile Strength, MPa | | ~2.2 | | 2.3 | |
| Elongation at Break, % | | ~270 | | 210 | |
| Hardness, Shore A | | 45 | | 40 | |

| Adhesion- | | Fail Mode | Corrosion | Fail Mode | Corrosion |
|---|---|---|---|---|---|
| | Stainless Steel | Cohesive | 1 | Cohesive | 1 |
| | Aluminium | Cohesive | 1 | Cohesive | 1 |
| | PC Polyester | Cohesive | 1 | Cohesive | 2 |
| | Copper | Cohesive | 1 | Cohesive | 5 |
| | Brass | Cohesive | 1 | Cohesive | 4 |

### EXAMPLE 3

A uniform mixture was prepared by blending 32 parts of a hydroxyl-terminated polydimethylsiloxane polymer with a viscosity of approximately 50,000 mPa.s with 20 parts of a second hydroxyl-terminated polydimethylsiloxane polymer of viscosity of approximately 10,000 mPa.s (Components A). To the above blend of polymers was added 4.5 parts by weight of hydrophobised fumed silica (Degussa R972). The latter was mixed into the polymer blend until a smooth, agglomerate-free dispersion was obtained. 165 parts of a blend of aluminium oxides (Alcan aluminas) was added to the above filler dispersion and mixed until fully dispersed. This mixture is called Dispersion 3.

A sealant, Example 3(a) according to the invention and a comparative sealant 3(b) were prepared by adding each of the components shown in Table 5 in the order given.

**TABLE 5**

| | Example | |
|---|---|---|
| (Parts by weight) | 3(a) | 3(b) |
| Dispersion 3 | 100 | 100 |
| Vinyl *tris*-isopropenyloxy silane | 2.45 | --- |
| Methyl *tris*-(2-butanoximo)silane | --- | 2.20 |
| Vinyl *tris*-(2-butanoximo)silane | --- | 0.50 |
| γ-aminopropyltriethoxysilane | 0.50 | 0.50 |
| Dibutyltin dilaurate | --- | 0.05 |
| 1,1,3,3-Tetramethylguanidine | 0.20 | --- |

The above formulations were semi-flowable products with a slump in excess of 10 mm when tested on a Boeing Jig. They were stable for at least 12 months at ambient temperatures and exhibited no significant change in properties after storing at 40° C. for 3 months. Samples were examined for the mode of failure and for any corrosive action or surface attack. The results are summarised in Table 6.

**TABLE 6**

| Test | | Example | | | |
|---|---|---|---|---|---|
| | | 3(a) | | 3(b) | |
| Tack Free Time, min | | 4 to 5 | | 9 to 10 | |
| Cure Through, hours | | <20 | | 24 | |
| Hardness, Shore A | | 85 | | 85 | |
| Thermal Conductivity, W/m.K | | ~1.5 | | ~1.5 | |

| Adhesion- | | Fail Mode | Corrosion | Fail Mode | Corrosion |
|---|---|---|---|---|---|
| | Aluminium | Cohesive | 1 | Cohesive | 1 |
| | Copper | Cohesive | 1 | Cohesive | 5 |
| | Brass | Cohesive | 1 | Cohesive | 4 |

### EXAMPLE 4

A uniform mixture was prepared by blending 42.0 parts of a hydroxyl-terminated polydimethylsiloxane polymer with a viscosity of approximately 50,000 mPa.s with 24.0 parts of a second hydroxyl-terminated polydimethylsiloxane polymer of viscosity of approximately 10,000 mPa.s (Component A).- To the above blend of polymers was added 5.8 parts by weight of hydrophobised fumed silica (Degussa R972). The latter was mixed into the polymer blend until a smooth, agglomerate-free dispersion was obtained. 209 parts by weight of a blend of 5 to 95 parts aluminium oxide and 95 to 5 parts aluminium nitride was added to the above filler dispersion and mixed until fully dispersed. This mixture is called Dispersion 4.

A sealant, Example 4(a) according to the invention and a comparative sealant 4(b) were prepared by adding each of the components shown in Table 7 in the order given.

**TABLE 7**

| | Example | |
|---|---|---|
| (Parts by weight) | 4(a) | 4(b) |
| Dispersion 4 | 100 | 100 |
| Vinyl *tris*-isopropenyloxy silane | 2.45 | --- |
| Methyl *tris*-(2-butanoximo)silane | --- | 2.20 |
| Vinyl *tris*-(2-butanoximo)silane | --- | 0.50 |
| γ-aminopropyltriethoxysilane | 0.50 | 0.50 |
| Dibutyltin dilaurate | --- | 0.05 |
| 1,1,3,3-Tetramethylguanidine | 0.20 | --- |

The above formulations were semi-flowable products with a slump in excess of 10 mm when tested on a Boeing Jig. They were stable at ambient temperatures and exhibited no significant change in properties after storing at 40° C. for 3 months. Samples were examined for the mode of adhesive failure and for any corrosive action or surface attack. The results are summarised in Table 8

**TABLE 8**

| Test | | Example | | | |
|---|---|---|---|---|---|
| | | 4(a) | | 4(b) | |
| Tack Free Time, min | | 1 to 3 | | 9 to 10 | |
| Cure Through, hours | | <18 | | 24 | |
| Hardness, Shore A | | 66 | | 85 | |
| Thermal Conductivity, W/m.K | | ~1.9 | | ~1.9 | |

| Adhesion- | | Fail Mode | Corrosion | Fail Mode | Corrosion |
|---|---|---|---|---|---|
| | Aluminium | Cohesive | 1 | Cohesive | 1 |
| | Copper | Cohesive | 1 | Cohesive | 5 |
| | Brass | Cohesive | 1 | Cohesive | 4 |

### Summary

The present invention is a RTV organopolysiloxane composition comprising (A) an organopolysiloxane having at least two hydroxyl groups attached to the terminal silicon atoms of the molecule, (B) finely divided silicon dioxide, (C) an amino-functional silane containing at least one amino-group per molecule, (D) a silane crosslinking agent, (E) a trialkoxysilane, and (F) an organic imine or substituted imine. Component (E) may be added to control the crosslink density of the composition as required. The RTV organopolysiloxane adhesive sealants so produced exhibit non-corrosive and primerless properties.

Although there has been described what is at present considered to be the preferred embodiments of the present invention, it will be understood that the invention can be embodied in other specific forms without departing from the spirit or essential characteristics thereof. The present embodiments are, therefore, to be considered in all aspects as illustrative and not restrictive. The scope of the invention is indicated by the appended claims rather than the foregoing description.

## Claims

1. A RTV organopolysiloxane composition having improved non-corrosive properties and being free from organometallic catalysts, comprising as their main components:
(A) an organopolysiloxane polymer molecule containing at least two hydroxyl groups each attached to the terminal silicon atoms in said molecule and that the organopolysiloxanes used may have a viscosity from 50 to 500,000 mPa.s at 25° C;
(B) finely divided silica filler;
(C) an amino-functional silane or derivative of such substances;
(D) an organic silicon compound of the following formula (I):
RₙSiX₄₋ₙ (I)
wherein R is a substituted or unsubstituted monovalent hydrocarbon group of 1 to 10 carbon atoms, X is a 1-methylvinyloxy group, and letter n is equal to 0,1 or 2;
(E) an organic silicon compound of the following formula (II):
R¹ ₚSiX₄₋ₚ (II)
wherein R¹ is a methyl, phenyl, vinyl or substituted vinyl group and X is methoxy or ethoxy or a mixture of methoxy and ethoxy, letter p is equal to 0, 1 or 2; and
(F) an organic imine curing catalyst of the following formulas (IIIa) and (IIIb): 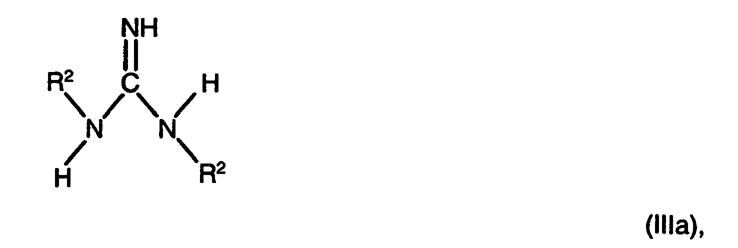 and 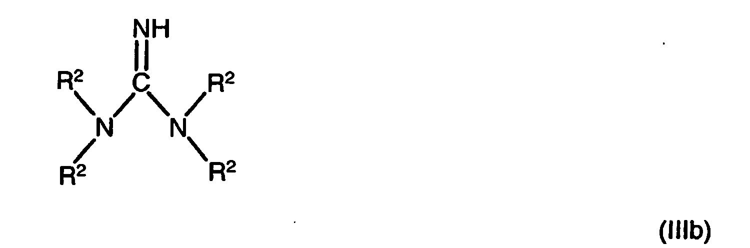
wherein each R² is independently selected from the group consisting of methyl, isopropyl, phenyl and *ortho*-tolyl groups.

2. The RTV organopolysiloxane composition of claim 1, wherein said component (A) comprises a organopolysiloxane described by formula (IV) 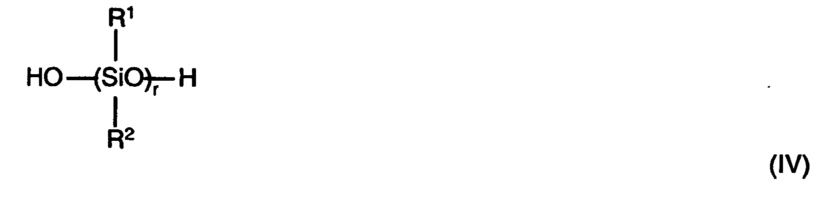 wherein R¹ and R² may be the same or different and are independently selected from group consisting of methyl, ethyl, propyl, butyl, cyclohexyl, vinyl, allyl, tolyl, phenyl, benzyl, octyl, 2-ethylhexyl, trifluoropropyl and cyanoethyl and r is such a number to provide an organopolysiloxane that exhibits said viscosity.

3. The RTV organopolysiloxane composition of claim 1, wherein said component (A) comprises at least two organopolysiloxane polymer molecules having a viscosity of about 100 to 100,000 mPa.S. at 25 ° C.

4. The RTV organopolysiloxane composition of claim 1, wherein said component (B) is selected from the group consisting of fused silica, fumed silica, precipitated silica and powdered quartz.

5. The RTV organopolysiloxane composition of claim 1, wherein said component (C) is selected from the group consisting of γ-aminopropyltriethoxysilane, γ-aminopropyltrimethoxysilane, β-aminoethyl-γ-aminopropyltrimethoxysilane, Triaminofunctional silane, N-phenyl-y-aminopropyltrimethoxysilane, Bis- [γ- (trimethoxysilyl) propyl]amine and N-β-aminoethyl-γ-aminopropylmethyldimethoxysilane.

6. The RTV organopolysiloxane composition of claim 1, wherein said component (C) is γ-aminopropyltriethoxysilane.

7. The RTV organopolysiloxane composition of claim 1, wherein said component (D) is selected from the group consisting of vinyl tris-isopropenyloxy silane, methyl tris-isopropenyloxy silane and phenyl tris-isopropenyloxy silane.

8. The RTV organopolysiloxane composition of claim 1, wherein said component (D) is vinyl tris-isopropenyloxy silane.

9. The RTV organopolysiloxane composition of claim 1, wherein said component (E) is selected from the group consisting of methyltriethoxysilane, methyltrimethoxysilane, phenytrimethoxysilane, phenyltriethoxysilane, vinyltriethoxysilane and vinyltrimethoxysilane.

10. The RTV organopolysiloxane composition of claim 1, wherein said component (E) is vinyltrimethoxysilane.

11. The RTV organopolysiloxane composition of claim 1, wherein said component (F) is selected from the group consisting of 1,3-diphenylguanidine, 1,3-di-o-tolylguanidine, 1,3-dimethylguanidine and 1,1,3,3-tetramethylguanadine.

12. The RTV organopolysiloxane composition of claim 1, wherein said component (F) is 1,1,3,3-tetramethylguanadine.

13. A RTV organopolysiloxane composition having improved non-corrosive properties and being free from organometallic catalysts made by combining:
(A) about 100 parts by weight of an organopolysiloxane polymer molecule containing at least two hydroxyl groups each attached to the terminal silicon atoms in said molecule and having a viscosity of about 50 to 500,000 mPa.s at 25° C.;
(B) 1 to 20 parts by weight of a finely divided silicon dioxide;
(C) 0.1 to 5.0 parts by weight of an amino-functional silane or derivative of such substances;
(D) 1.0 to 10.0 parts by weight of an organic silicon compound of the following formula (I):
RₙSiX₄₋ₙ (I)
wherein R is a substituted or unsubstituted monovalent hydrocarbon group of 1 to 10 carbon atoms, X is a 1-methylvinyloxy group, and letter n is equal to 0,1 or 2;
(E) 0 to 1.0 parts by weight of an organic silicon compound of the following formula (II):
R¹ ₚSiX₄₋ₚ (II)
wherein R¹ is a methyl, phenyl, vinyl or substituted vinyl group and X is methoxy or ethoxy or a mixture of methoxy and ethoxy, letter p is equal to 0, 1 or 2; and
(F) 0.1 to 3.0 parts by weight of an organic imine curing catalyst of the following formulas (IIIa) and (IIIb): 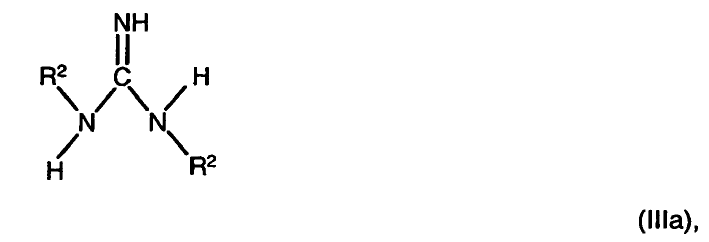 and 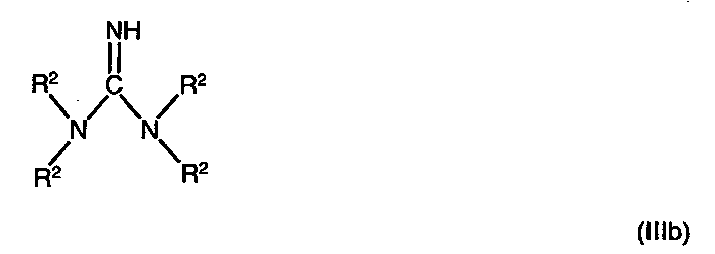
wherein each R² is independently selected from the group consisting of methyl, isopropyl, phenyl and *ortho*-tolyl groups.

## Patentansprüche

1. Eine RTV Organopolysiloxan-Zusammensetzung mit verbesserter Korrosionsbeständigkeit und ohne organometallische Katalysatoren, umfassend als Hauptbestandteile:
(A) ein Organopolysiloxan-Polymermolekül enthaltend wenigstens zwei Hydroxylgruppen, die jeweils an den Silikonendatomen in dem Molekül befestigt sind und wobei die verwendeten Organopolysiloxane eine Viskosität von 50 bis 500.000 mPa.s bei 25 °C aufweisen können;
(B) fein verteilter Siliziumdioxidfüllstoff;
(C) ein aminofunktionelles Silan oder Derivat solch einer Substanz;
(D) eine organische Silikonverbindung der folgenden Formel (I):
RₙSiX₄₋ₙ (I)
wobei R eine substituierte oder unsubstituierte einwertige Kohlenwasserstoffgruppe mit 1 bis 10 Kohlenstoffatomen ist, X eine 1-Methylvinyloxygruppe ist und der Buchstabe n 0, 1 oder 2 entspricht;
(E) eine organische Silikonverbindung der folgenden Formel (II)
R¹pSiX₄₋ₚ (II)
wobei R¹ eine Methyl-, Phenyl-, Vinyl- oder substituierte Vinylgruppe ist und X Methoxy oder Ethoxy ist oder eine Mischung aus Methoxy und Ethoxy, der Buchstabe p 0, 1 oder 2 entspricht; und
(F) einen organischer Iminvernetzungskatalysator mit den folgenden Formeln (IIIa) und (IIIb): 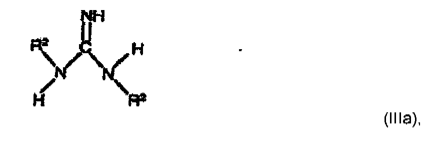 und 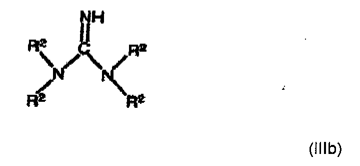
wobei jedes R² unabhängig aus der Gruppe ausgewählt ist, bestehend aus Methyl-, Isopropyl-, Phenyl- und ortho-Toloylgruppen.

2. RTV Organosiloxan-Zusammensetzung nach Anspruch 1, wobei der Bestandteil (A) ein Organopolysiloxan umfasst, beschrieben durch die Formel (IV) 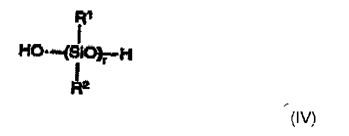 wobei R¹ und R² gleich oder unterschiedlich sein können und unabhängig aus der Gruppe ausgewählt werden, bestehend aus Methyl, Ethyl, Propyl, Butyl, Cyclohexyl, Vinyl, Allyl, Tolyl, Phenyl, Benzyl, Octyl, 2-Ethylhexyl, Trifluoropropyl und Cyanoethyl und r solch eine Zahl ist, um ein Organopolysiloxan bereitzustellen, welches diese Viskosität zeigt.

3. RTV Organopolysiloxan-Zusammensetzung nach Anspruch 1, wobei der Bestandteil (A) wenigstens zwei Organopolysiloxan-Polymermoleküle umfasst, mit einer Viskosität von ungefähr 100 bis 100.0000 mPa.s. bei 25 °C.

4. RTV Organopolysiloxan-Zusammensetzung nach Anspruch 1, wobei der Bestandteil (B) aus der Gruppe gewählt wird, bestehend aus Kieselgut bzw. Quarzgut, hochdispersem Siliziumdioxid, ausgefälltem Siliziumdioxid und pulverförmigem Quartz.

5. RTV Organopolysiloxan-Zusammensetzung nach Anspruch 1, wobei der Bestandteil (C) aus der Gruppe ausgewählt wird, bestehend aus γ-Aminopropyltriethoxysilan, γ-Aminopropyltrimethoxysilan, β-Aminoethyl-γ-aminopropyltrimethoxysilan, triaminofunkionellem Silan, N-Phenyl-γ-aminopropyltrimethoxysilan, bis- [γ-(Trimethoxysilyl) propyl] amin und N-β-Aminoethyl-γ-aminopropylmethyldimethoxysilan.

6. RTV Organopolysiloxan-Zusammensetzung nach Anspruch 1, wobei der Bestandteil (C) γ-Aminopropyltriethoxysilan ist.

7. RTV Organopolysiloxan-Zusammensetzung nach Anspruch 1, wobei der Bestandteil (D) aus der Gruppe ausgewählt ist, bestehend aus Vinyl tris-Isopropenyloxysilan, Methyl tris-Isopropenyloxysilan und Phenyl tris-Isoproponyloxysilan.

8. RTV Organopolysiloxan-Zusammensetzung nach Anspruch 1, wobei der Bestandteil (D) Phenyl tris-Isopropenyloxysilan ist.

9. RTV Organopolysiloxan-Zusammensetzung nach Anspruch 1, wobei der Bestandteil (E) aus der Gruppe gewählt ist, bestehend aus Methyltriethoxysilan, Methyltrimethoxysilan, Phenyltrimethoxysilan, Phenyltriethoxysilan, Vinyltriethoxysilan und Vinyltrimethoxysilan ist.

10. RTV Organopolysiloxan-Zusammensetzung nach Anspruch 1, wobei der Bestandteil (E) Vinyltrimethoxysilan ist.

11. RTV Organopolysiloxan-Zusammensetzung nach Anspruch 1, wobei der Bestandteil (F) aus der Gruppe gewählt ist, bestehend aus 1,3-Diphenylguanidin, 1,3-di-o-Toloylguanidin, 1,3-Dimethylguanidin und 1,1,3,3-Tetramethylguanidin.

12. RTV Organopolysiloxan-Zusammensetzung nach Anspruch 1, wobei der Bestandteil (F) 1,1,3,3-Tetramethylguanadin ist.

13. RTV Organopolysiloxan-Zusammensetzung mit verbesserter Korrosionsbeständigkeit und ohne organometallische Katalysatoren, hergestellt durch das Kombinieren von:
(A) ungefähr 100 Gew.-Teilen eines Organopolysiloxan-Polymermoleküls, weiches wenigstens zwei Hydroxylgruppen enthält, die jeweils an Sillkonendatomen in dem Molekül befestigt sind und eine Viskosität von ungefähr 50 bis 500.000 mPa.s. bei 25 °C aufweisen;
(B) 1 bis 20 Gew.-Teile eines fein verteilten Siliziumdioxid;
(C) 0,1 bis 5,0 Gew.-Teile eines aminofunktionellen Silans oder Derivaten solcher Substanzen:
(D) 1,0 bis 10,0 Gew.-Teile einer organischen Silikonverbindung der folgenden Formel (1):
RₙSiX₄₋ₙ (I)
wobei R eine substituierte oder unsubstiuierte einwertige Kohlenwasserstoffgruppe mit 1 bis 10 Kohlenstoffatomen ist, X eine 1-Methylvinyloxygruppe ist und der Buchstabe n 0, 1 oder 2 entspricht;
(E) 0 bis 1,0 Gew.-Teile einer organischen Silikonverbindung der folgenden Formel (II):
R¹ ₚSiX₄₋ₚ (II)
wobei R¹ eine Methyl-, Phenyl-, Vinyl- oder substituierte Phenylgruppe ist und X Methoxy oder Ethoxy oder eine Mischung aus Methoxy und Ethoxy ist, der Buchstabe p 0, 1 oder 2 entspricht; und
(F) 0,1 bis 3,0 Gew.-Teile eines organischen Iminvernetzungskatalysators der folgenden Formeln (IIIa) und (IIIb): 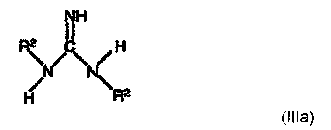 und 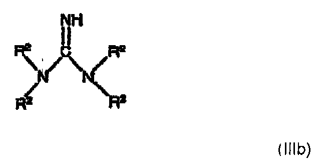
wobei jedes R² unabhängig aus der Gruppe ausgewählt wird, bestehend aus Methyl-, Isopropyl-, Phenyl- und ortho-Toloylgruppen.

## Revendications

1. Composition de poly(organosiloxane) vulcanisable à température ambiante possédant des propriétés non corrosives améliorées et étant dépourvue de catalyseur organométallique, comprenant en tant que composants principaux :
(A) une molécule de polymère poly(organosiloxane) contenant au moins deux groupes hydroxyle chacun attaché aux atomes de silicium en bout de chaîne dans ladite molécule et les poly(organosiloxanes) utilisés peuvent avoir une viscosité de 50 à 500 000 mPa.s à 25 °C ;
(B) une charge de silice finement divisée ;
(C) un silane à fonctionnalité amino ou dérivé de telles substances ;
(D) un composé de silicium organique de formule (I) suivante :
RₙSiX₄₋ₙ (I)
dans laquelle R est un groupe hydrocarboné monovalent substitué ou non substitué de 1 à 10 atomes de carbone, X est un groupe 1-méthylvinyloxy et la lettre n est égale à 0, 1 ou 2 ;
(E) un composé de silicium organique de formule (II) suivante :
R¹ ₚSiX₄₋ₚ (II)
dans laquelle R¹ est un groupe méthyle, phényle, vinyle ou vinyle substitué et X est un groupe méthoxy ou éthoxy ou un mélange d'un groupe méthoxy et d'un groupe éthoxy, la lettre p est égale à 0, 1 ou 2 ; et
(F) un catalyseur de durcissement imine organique de formules (IIIa) et (IIIb) suivantes : 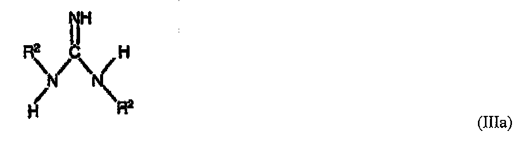 et 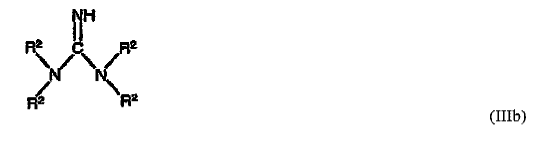
dans lesquelles chaque R² est indépendamment choisi dans le groupe constitué par les groupes méthyle, isopropyle, phényle et *ortho*-tolyle.

2. Composition de poly(organosiloxane) vulcanisable à température ambiante selon la revendication 1, dans laquelle ledit composant (A) comprend un poly(organosiloxane) décrit par la formule (IV) 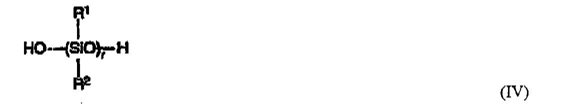 dans laquelle R¹ et R² peuvent être identiques ou différents et sont indépendamment choisis dans le groupe constitué parles groupes méthyle, éthyle, propyle, butyle, cyclohexyle, vinyle, allyle, tolyle, phényle, benzyle, octyle, 2-éthylhexyle, trifluoropropyle et cyanoéthyle et r est un nombre tel à fournir un poly(oganosiloxane) qui présente ladite viscosité.

3. Composition de poly(organosiloxane) vulcanisable à température ambiante selon la revendication 1, dans laquelle ledit composant (A) comprend au moins deux molécules de polymère poly(organosiloxane) ayant une viscosité d'environ 100 à 100 000 mPa.s à 25 °C.

4. Composition de poly(orgànosiloxane) vulcanisable à température ambiante selon la revendication 1, dans laquelle ledit composant (B) est choisi dans le groupe constitué par la silice fondue, la silice fumée, la silice précipitée et le quartz en poudre.

5. Composition de poly(organosiloxane) vulcanisable à température ambiante selon la revendication 1, dans laquelle ledit composant (C) est choisi dans le groupe constitué par le γ-aminopropyltriéthoxysilane, le γ-aminopropyltriméthoxysilane, le β-aminoéthyl-γ-aminopropyltriméthoxysilane, le silane triaminofonctionnel, le N-phényl-γ-aminopropyltriméthoxysilane, la bis-[γ-(triméthoxysilyl)propyl]amine et le N-β-aminoéthyl-γ-aminopropylméthyldiméthoxysilane:

6. Composition de poly(organosiloxane) vulcanisable à température ambiante selon la revendication 1, dans laquelle ledit composant (C) est le γ-aminopropyltriéthoxysilane.

7. Composition de poly(organosiloxane) vulcanisable à température ambiante selon la revendication 1, dans laquelle ledit composant (D) est choisi dans le groupe constitué par le vinyltris-isopropényloxysilane, le méthyl tris-isopropényloxysilane et le phényl tris-isopropényloxysilane.

8. Composition de poly(organosiloxane) vulcanisable à température ambiante selon la revendication 1, dans laquelle ledit composant (D) est le vinyl tris-isopropényloxysilane.

9. Composition de poly(organosiloxane) vulcanisable à température ambiante selon la revendication 1, dans laquelle ledit composant (E) est choisi dans le groupe constitué par le méthyltriéthoxysilane, le méthyltriméthoxysilane, le phényltriméthoxysilane, le phényltriéthoxysilane, le vinyltriéthoxysilane et le vinyltriméthoxysilane.

10. Composition de poly(organosiloxane) vulcanisable à température ambiante selon la revendication 1, dans laquelle ledit composant (E) est le vinyltriméthoxysilane.

11. Composition de poly(organosiloxane) vulcanisable à température ambiante selon la revendication 1, dans laquelle ledit composant (F) est choisi dans le groupe constitué par la 1,3-diphénylguanidine, la 1,3-di-o-tolylguanidine, la 1,3-ditnéthylguanidine et la 1,1,3,3-tétxaméthylguanidine.

12. Composition de poly(organosiloxane) vulcanisable à température ambiante selon la revendication 1, dans laquelle ledit composant (F) est la 1,1,3,3-tétraméthylguanidine.

13. Composition de poly(organosiloxane) vulcanisable à température ambiante possédant des propriétés non corrosives améliorées et étant dépourvue de catalyseur organométallique préparée en combinant :
(A) environ 100 parties en poids d'une molécule de polymère poly(organosiloxane) contenant au moins deux groupes hydroxyle chacun attaché aux atomes de silicium en bout de chaîne dans ladite molécule et ayant une viscosité d'environ 50 à 500 000 mPa.s à 25 °C :
(B) 1 à 20 parties en poids d'un oxyde de silicium finement divisé ;
(C) 0,1 à 5,0 parties en poids d'un silane à fonctionnalité amino ou dérivé de telles substances ;
(D) 1,0 à 10,0 parties en poids d'un composé de silicium organique de formule (I) suivante :
RₙSiX₄₋ₙ (I)
dans laquelle R est un groupe hydrocarboné monoavalent substitué ou non substitué de 1 à 10 atomes de carbone, X est un groupe 1-méthylvinyloxy et la lettre n est égale à 0, 1 ou 2 ;
(E) 0 à 1,0 parties en poids d'un composé de silicium organique de formule (II) suivante :
R¹ ₚSiX₄₋ₚ (II)
dans laquelle R¹ est un groupe méthyle, phényle, vinyle ou vinyle substitué et X est un groupe méthoxy ou éthoxy ou un mélange d'un groupe méthoxy et d'un groupe éthoxy, la lettre p est égale à 0, 1 ou 2 ; et
(F) 0,1 à 3,0 parties en poids d'un catalyseur de durcissement imine organique de formules (IIIa) et (IIIb) suivantes : 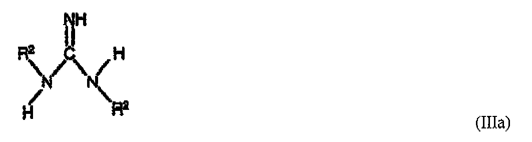 et 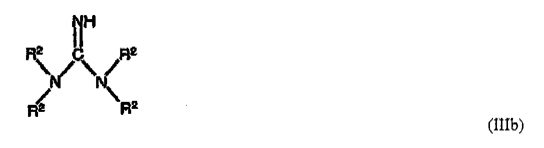
dans lesquelles chaque R² est indépendamment choisi dans le groupe constitué par les groupes méthyle, isopropyle, phényle et *ortho*-tolyle.
